# FASCICULE DE BREVET EUROPEEN

(11) **EP 2 960 619 B1**
(45) Date de publication et mention de la délivrance du brevet: **19.10.2016**
(21) Numéro de dépôt: 15290153.4
(22) Date de dépôt: 10.06.2015
(51) Int. Cl.: F42B 10/46, B64G 1/58, F42B 15/34

(54) **PAROI STRUCTURANTE DE MISSILE, EN PARTICULIER POUR COIFFE DE PROTECTION THERMIQUE**
Strukturelle Wand eines Flugkörpers, insbesondere für eine thermische Schutzhaube
Structural wall of a missile, particularly for a thermal protective cap

(30) Priorité: 25.06.2014 FR 1401422
(43) Date de publication de la demande: 30.12.2015
(73) Titulaire: MBDA France, 92350 Le Plessis-Robinson (FR)
(72) Inventeur: Quertelet, Clément, 75005 Paris (FR)
(74) Mandataire: Gevers & Orès

(56) Documents cités:
- US-A- 5 413 859
- US-A- 5 979 826
- US-A- 6 091 375
- US-B1- 6 558 785
- US-B1- 6 592 981

## Description

La présente invention concerne une paroi structurante d'un missile.

Bien que non exclusivement, cette paroi structurante concerne plus particulièrement une coiffe de protection thermique de missile, qui est destinée à être montée à l'avant d'un missile, et elle est décrite plus spécifiquement sur la base d'une telle coiffe de protection. Toutefois, l'invention peut être appliquée à différentes parties de paroi d'un missile, en particulier au niveau du corps structurant de celui-ci, de toute paroi structurante soumise à un flux thermique ou aérothermique important.

Par ailleurs, la présente invention peut notamment s'appliquer à un missile comprenant au moins un étage propulsif largable et un véhicule terminal qui est agencé à l'avant de l'étage propulsif. Un tel véhicule terminal comprend généralement, notamment, un capteur faisant par exemple partie d'un autodirecteur et susceptible d'être sensible à la température.

Bien que non exclusivement, la présente invention peut ainsi s'appliquer plus particulièrement à un missile présentant un domaine de vol restant dans l'atmosphère et qui dispose de performances cinématiques permettant d'amener le véhicule terminal à des vitesses hypersoniques. A ces hautes vitesses, la température de surface du missile peut atteindre plusieurs centaines de degrés Celsius sous l'effet du flux aérothermique, ce qui peut être préjudiciable pour la tenue et les performances des structures, ainsi que des équipements électroniques et notamment des capteurs embarqués. Pour cette raison, il est nécessaire de prévoir une coiffe de protection.

En raison des capacités dynamiques et cinématiques importantes du missile, la coiffe de protection doit être en mesure de soutenir non seulement des échauffements élevés, mais également des sollicitations mécaniques importantes. Par ailleurs, au moins un dispositif qui est agencé à l'intérieur de la coiffe et qui est destiné à réaliser l'ouverture de la coiffe doit également être protégé des flux thermiques éventuellement transmis par la coiffe sur laquelle ce dernier est fixé.

Une solution consiste à recouvrir la partie structurelle de la paroi de la coiffe, à l'extérieur, par une importante et épaisse couche de protection thermique de manière à protéger thermiquement l'intérieur de la coiffe et notamment le véhicule terminal, mais également de manière à conserver le matériau structurant de la coiffe (partie structurelle) à une température relativement basse (pour que celui-ci ne subisse pas de pertes de ses caractéristiques mécaniques).

Toutefois, comme une telle couche épaisse doit présenter des caractéristiques de protection thermique et également des caractéristiques de protection mécanique, elle a une masse importante, ce qui est préjudiciable pour les performances du missile.

Par ailleurs, on connaît par le document US-5 979 826 une paroi structurante, notamment pour missile, selon le préambule de la revendication 1, comprenant des couches de protection.

La présente invention concerne une paroi structurante de missile, en particulier une coiffe de protection du missile, qui a pour objet de remédier à l'inconvénient précité.

A cet effet, selon l'invention, ladite paroi structurante comprenant une partie structurelle pourvue d'une face externe et d'une face interne, est remarquable en ce qu'elle comprend de plus, au moins au niveau d'une partie de la partie structurelle :
- sur la face externe de la partie structurelle, au moins une couche externe de protection thermique ; et
- sur la face interne de la partie structurelle, au moins une couche interne de protection thermique,
et en ce que la couche interne est réalisée en un matériau présentant une densité plus faible d'un rapport compris entre 2 et 20 que celle du matériau de la couche externe.

Ainsi, grâce à l'invention :
- la couche externe qui est configurée avantageusement pour réaliser également une protection mécanique et présente une densité élevée, a une masse réduite en raison d'une épaisseur réduite ; et
- la couche interne permet de compenser la réduction de protection thermique générée par la réduction d'épaisseur de la couche externe, en permettant d'empêcher ou tout au moins de fortement réduire un transfert thermique préjudiciable de la partie structurelle vers des équipements internes à la paroi. Dans le cas par exemple d'une paroi d'une coiffe de protection thermique, l'invention permet de réduire un transfert thermique préjudiciable vers un capteur d'un véhicule terminal ou un dispositif d'ouverture de la coiffe de protection et d'éjection du véhicule terminal.

Cette nouvelle structure de paroi ne réduit donc pas les performances du missile, dont les parties internes sont protégées thermiquement (par la combinaison des couches externe et interne) et mécaniquement (par la partie structurelle, avec la participation de la couche externe à la tenue mécanique).

De plus, en raison de la densité très faible du matériau de la couche de protection thermique interne, qui présente une masse réduite, on obtient une paroi de coiffe à au moins trois couches (couche externe, partie structurelle, couche interne) dont la masse globale est beaucoup plus faible que celle d'une coiffe précitée comprenant en plus de la partie structurelle une protection externe épaisse (et lourde). On obtient donc un ensemble plus performant.

Ainsi, dans le cadre de la présente invention, au lieu de chercher à obtenir une température relativement basse de la partie structurelle, on tolère que celle-ci soit plus élevée en prévoyant une couche externe beaucoup moins épaisse, mais en empêchant simultanément l'apparition d'effets néfastes sur les équipements par l'intermédiaire de la couche interne.

Dans un mode de réalisation préféré :
- la couche externe comprend un matériau à base de silicone ou de graphite pourvu d'éléments (fibres, tissus,...) intégrés ; et/ou
- la couche interne comprend un matériau fibreux ; et/ou
- la partie structurelle est réalisée en l'un des matériaux suivants : un matériau métallique, un matériau composite thermo-structural, un matériau céramique.

Par ailleurs, dans un mode de réalisation particulier, la paroi structurante, de préférence d'une coiffe de protection, comprend au moins deux coques liées ensemble au niveau de zones de liaison (ou de jonction), la couche externe recouvre ladite face externe également au niveau desdites zones de liaison, et la couche interne libère lesdites zones de liaison sur ladite face interne.

Ainsi, la paroi structurante est dotée d'une protection thermique recouvrant à l'extérieur les bords libres (au niveau de zones de liaison), ce qui participe à l'étanchéité de la paroi structurante. La couche externe de protection thermique est déchirée, au niveau des zones de liaison, lors de la séparation des coques, par exemple durant un largage ou une ouverture de coiffe.

Par ailleurs, avantageusement, la paroi structurante, de préférence d'une coiffe de protection, comporte au moins une pièce interne, par exemple un actionneur pyrotechnique, qui est liée par au moins l'une de ses extrémités à la partie structurelle. La pièce interne est liée à la face interne de la partie structurelle par l'intermédiaire d'un élément d'interface de protection thermique, au travers d'une ouverture prévue dans la couche interne. De préférence, l'élément d'interface est réalisé en un matériau identique à celui de la couche externe.

On notera que le raccordement de pièces internes, telles que des actionneurs pyrotechniques par exemple, directement à la partie structurelle de la paroi (notamment d'une coiffe) ne peut pas convenir, car la température (dépassant par exemple 200°C) est susceptible de dégrader le fonctionnement de l'actionneur pyrotechnique voire de le déclencher de façon intempestive.

Par ailleurs, dans un premier mode de réalisation, lesdites couches externe et interne sont agencées sur toute ladite partie structurelle, ce qui permet d'obtenir une protection globale, par exemple d'une coiffe de protection.

En outre, dans un second mode de réalisation, lesdites couches externe et interne sont agencées uniquement sur une partie (de préférence l'extrémité avant dans le cas d'une coiffe de protection) de la partie structurelle, ce qui permet de réduire la masse de la paroi structurante, tout en appliquant une protection aux zones les plus chaudes, par exemple au nez de la coiffe de protection. Dans ce second mode de réalisation, avantageusement, la partie structurelle est réalisée en un matériau composite thermo-structural ou en un matériau céramique, qui présente une bonne protection thermique.

Dans un mode de réalisation particulier, la paroi structurante concerne donc la paroi d'une coiffe de protection thermique qui est destinée à être montée à l'avant du missile.

La présente invention concerne également un missile qui comprend la paroi structurante, et notamment une coiffe de protection, telles que celles décrites ci-dessus.
Les figures annexées feront bien comprendre comment l'invention peut être réalisée. Sur ces figures, des références identiques désignent des éléments semblables.
Les figures 1 et 2 montrent schématiquement un exemple de missile auquel s'applique une coiffe de protection selon la présente invention, respectivement, dans une position montée sur le missile et dans une position de largage ou d'ouverture.
La figure 3 est une vue schématique, en coupe, d'une partie d'une paroi de la coiffe de protection.
La figure 4B illustre un exemple de zone de liaisons de coques, selon une vue dans un plan représenté schématiquement sur la figure 4A.
La figure 5 montre l'agencement d'un élément d'interface de protection thermique.

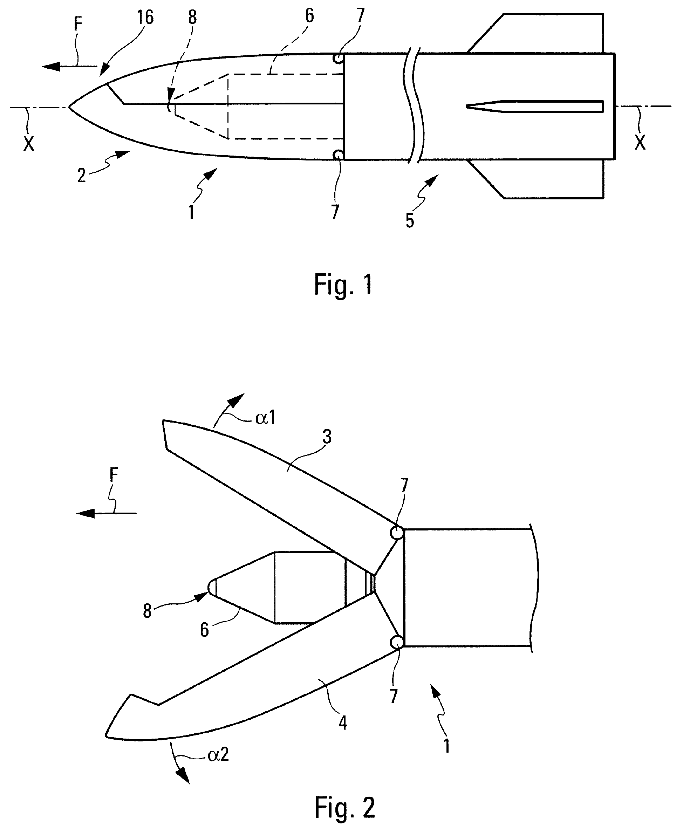

La présente invention s'applique à un missile 1 représenté schématiquement sur les figures 1 et 2, et elle concerne une paroi structurante 10 du missile 1.

Cette paroi structurante peut correspondre à toute partie de paroi du missile 1, qui doit être protégée notamment thermiquement et également mécaniquement. De façon préférée, mais non limitative, l'invention est décrite ci-dessous en référence à une paroi 10 d'une coiffe de protection 2.

Cette coiffe de protection 2 est agencée à l'avant du missile 1 (dans le sens de déplacement F dudit missile 1). Cette coiffe de protection 2 comporte une pluralité de coques 3 et 4, en l'occurrence deux coques 3 et 4 sur l'exemple des figures 1 et 2.

Sur ces figures 1 et 2, l'invention est appliquée à un missile 1 d'axe longitudinal X-X, qui comprend au moins un étage propulsif 5 largable (à l'arrière) et un véhicule terminal 6 qui est agencé à l'avant (dans le sens de déplacement F) de cet étage propulsif 5.

En général, un tel véhicule terminal 6 volant comprend, notamment, au moins un capteur 8 agencé à l'avant, faisant par exemple partie d'un autodirecteur et susceptible d'être sensible à la température. L'étage propulsif 5 et le véhicule terminal 6 qui peuvent être de tout type usuel, ne sont pas décrits davantage dans la description suivante.

De façon usuelle, le ou les étages propulsifs 5 d'un tel missile 1 sont destinés à la propulsion dudit missile 1, à partir du tir jusqu'à l'approche d'une cible (devant être neutralisée par le missile 1). La phase terminale du vol est, quant à elle, réalisée de façon autonome par le véhicule terminal 6, qui utilise notamment les informations issues du capteur 8 embarqué, par exemple un capteur optoélectronique destiné à aider à la détection de la cible. Pour ce faire, le véhicule terminal 6 comprend tous les moyens usuels (non décrits davantage), qui sont nécessaires pour réaliser ce vol terminal. Avant de mettre en oeuvre la phase terminale, la coiffe de protection 2 est larguée (ou tout au moins ouverte), après une séparation des différentes coques 3 et 4, par exemple par pivotement, pour libérer le véhicule terminal 6 (volant) qui se sépare ensuite du reste du missile 1.

Dans la situation de la figure 1, la coiffe de protection 2 est montée sur le missile 1 dans une position de fonctionnement (ou de protection). Le véhicule terminal 6 monté à l'intérieur de la coiffe de protection 2 est représenté en traits interrompus.

En outre, dans la situation de la figure 2, les coques 3 et 4 sont en train de se séparer, par exemple en étant pivotées via des éléments de charnière 7 (ou de rotation) représentés schématiquement sur la figure 2, comme illustré respectivement par des flèches α1 et α2, durant une phase d'ouverture ou de largage de la coiffe de protection 2. Cette phase d'ouverture ou de largage de la coiffe de protection 2 permet la libération du véhicule terminal 6, qui peut par exemple être éjecté hors du missile 1 à l'aide de moyens d'éjection appropriés (non représentés).

Bien que non exclusivement, la présente invention peut s'appliquer plus particulièrement à un missile 1 présentant un domaine de vol restant dans l'atmosphère et qui dispose de performances cinématiques permettant d'amener le véhicule terminal 6 à des vitesses hypersoniques. A ces hautes vitesses, la température de surface du missile 1 peut atteindre plusieurs centaines de degrés Celsius sous l'effet du flux aérothermique, ce qui nécessite de prévoir une coiffe de protection 2 efficace pour permettre la tenue et les performances des structures, et des équipements électroniques et notamment des capteurs embarqués.

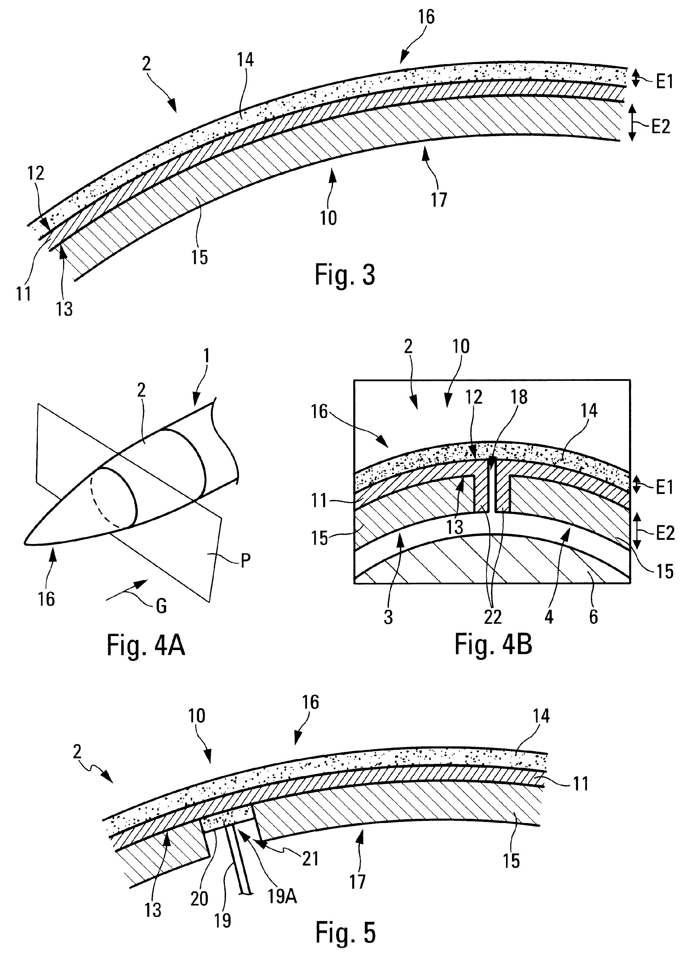

La coiffe de protection 2 qui est destinée à être montée à l'avant du missile 1 pour recouvrir, au moins en partie et de préférence en totalité, le véhicule terminal 6, comporte une paroi 10 pourvue d'une partie (ou couche) structurelle 11, comme représenté sur la figure 3. La figure 3 montre une partie de la paroi 10 selon une coupe transversalement à l'axe X-X (par exemple suivant un plan P représenté sur la figure 4A).

Cette partie structurelle 11 présente une face externe 12 et une face interne 13, définies respectivement vers l'extérieur et vers l'intérieur du missile 1 (ou de l'axe longitudinal X-X du missile 1).

Selon l'invention, la paroi 10 comprend de plus, au moins au niveau d'une extrémité (ou partie) avant 16 de la partie structurelle 11 :
- sur la face externe 12 de la partie structurelle 11, une couche externe 14 de protection thermique ; et
- sur la face interne 13 de la partie structurelle 11, une couche interne 15 de protection thermique.

De plus, selon l'invention, la couche interne 15 est réalisée en un matériau présentant une densité plus faible d'un rapport compris entre 2 et 20 que la densité du matériau de la couche externe 14.

Ainsi, la paroi 10 comprend, en plus de la partie structurelle 11, une couche externe 14 de protection thermique, qui est combinée avec une couche interne 15 de protection thermique. Plus précisément :
- la couche externe 14 qui est configurée pour réaliser également une protection mécanique et présente à cet effet une densité élevée, a une masse réduite en raison d'une épaisseur E1 réduite ; et
- la couche interne 15 permet de compenser la réduction de protection thermique générée par la réduction d'épaisseur de la couche externe 14, en permettant d'empêcher ou tout au moins de fortement réduire un transfert thermique préjudiciable de la partie structurelle 11 vers des équipements internes à la coiffe de protection 2, et notamment vers le capteur 8 du véhicule terminal 6.

Cette structure de la paroi 10 ne réduit donc pas les performances du missile 1, dont l'intérieur 17 est protégé thermiquement (par la combinaison de la couche externe 14 et de la couche interne 15). La paroi 10 est aussi protégée mécaniquement par la partie structurelle 11, à laquelle protection mécanique participe également la couche externe 14.

De plus, en raison de la densité très faible du matériau de la couche interne 15 de protection thermique, qui présente une masse réduite, la paroi 10 de la coiffe de protection 2, à au moins trois couches (couche externe 14, partie structurelle 11, couche interne 15), présente une masse globale qui est beaucoup plus faible que celle d'une coiffe comprenant une protection externe usuelle, épaisse et lourde. On obtient ainsi une coiffe de protection 2 plus légère et donc un missile 1 plus performant.

Ainsi, dans le cadre de la présente invention, au lieu de chercher à obtenir une température relativement basse de la partie structurelle 11, on tolère que celle-ci soit plus élevée en prévoyant une couche externe 14 beaucoup moins épaisse, et en supprimant les effets néfastes correspondants sur les équipements par l'intermédiaire de la couche interne 15.

Par ailleurs, dans l'exemple particulier représenté sur les figures 3 et 4B notamment, la couche externe 14 présente une épaisseur E1 réduite plus faible que l'épaisseur E2 de la couche interne 15.

Dans un mode de réalisation particulier :
- la couche externe 14 comprend un matériau à base de silicone pouvant être chargé de fibres courtes (carbone, verre, silice, aramide) ou de tissus (carbone, verre, silice, aramide). Elle peut également être réalisée à partir de graphite, résine phénolique ou d'autres matériaux usuels ; et
- la couche interne 15 comprend un matériau fibreux, du type laine de silice, feutre de silice, fibres de silicate de magnésium, FCR (Fibres Céramiques Réfractaires), fibres de silicate d'aluminium, fibres polycrystallines,... La couche interne 15 peut être accompagnée d'un tissu de retenue ou comporter un matériau sandwich comprenant plusieurs isolants.

De tels matériaux pour la couche interne 15 présentent un grand avantage par rapport aux matériaux de protection thermique externes, à savoir une densité inférieure à 0,5 (soit deux à vingt fois moins denses environ que les matériaux précités pour la couche externe 14). En contrepartie, ces matériaux pour la couche interne 15 ne présentent aucune tenue mécanique, mais ceci n'est pas gênant puisqu'ils sont employés à l'intérieur de la coiffe de protection 2.

En outre, la partie structurelle 11 peut être réalisée en l'un des types de matériaux suivants :
- un matériau métallique, tel que des aciers hautes performances (type X4, X5,...) ou des alliages de titane (par exemple du Ti6Al4V) ; ou
- un matériau composite thermo-structural, en particulier de type CMC (Composite à Matrice Céramique) ; ou
- un matériau céramique (carbure de silicium,...).

Par ailleurs, dans un mode de réalisation particulier, représenté sur la figure 4B qui est une vue partielle, selon la flèche G du plan transversal P représenté sur la figure 4A, les deux coques 3 et 4 sont liées ensemble au niveau de zones de liaison (ou de jonction), telle que la zone de liaison 18. Dans ce mode de réalisation particulier :
- la couche externe 14 recouvre ladite face externe 12 également au niveau de la zone de liaison 18 (définie par deux bords radiaux 22 de partie structurelle) ; et
- la couche interne 15 libère la zone de liaison 18 sur ladite face interne 13, en s'arrêtant au niveau des bords radiaux 22.

Ainsi, la coiffe de protection 2 est dotée d'une protection thermique recouvrant à l'extérieur 16 les bords libres (au niveau de zones de liaison 18), ce qui participe à l'étanchéité de la coiffe. La couche externe 14 de protection thermique est déchirée, au niveau des zones de liaison 18, lors de la séparation des coques 3 et 4 durant le largage ou l'ouverture de la coiffe de protection 2.

Cette solution empêche l'apparition d'une ouverture au niveau de la zone de liaison 18 qui laisserait s'introduire le flux aérothermique (apte à entraîner un échauffement préjudiciable des équipements embarqués et notamment du capteur 8 avant le décoiffage).

Dans un mode de réalisation particulier (non représenté), on peut prévoir un recouvrement interne des couches internes de deux coques adjacentes. De plus, dans ce cas, on peut prévoir un pré-découpage pour faciliter le déchirement de la couche externe.

Par ailleurs, la coiffe de protection 2 comporte au moins une pièce interne 19, par exemple un actionneur pyrotechnique ou un équipement électronique quelconque, qui est liée par au moins l'une 19A de ses extrémités à la partie structurelle 11. La pièce interne 19 est liée à la face interne 13 de la partie structurelle 11 par l'intermédiaire d'un élément d'interface 20 de protection thermique, en particulier sous forme de semelle, au travers d'une ouverture 21 prévue dans la couche interne 15, comme représenté sur la figure 5.

Dans un mode de réalisation préféré, l'élément d'interface 20 est réalisé en un matériau identique à celui de la couche externe 14, par exemple un matériau siliconé. L'élément d'interface 20 peut également être réalisé dans une céramique isolante de type nitrure de silicium, mullite, zircone ou autres.

Dans un mode de réalisation particulier, la coiffe de protection 2 comporte une pluralité de telles pièces internes 19.

On notera que le raccordement d'une pièce interne 19 telle qu'un actionneur pyrotechnique, directement à la partie structurelle 11 de la coiffe de protection 2 ne peut pas convenir, car la température est susceptible de dégrader le fonctionnement de l'actionneur pyrotechnique voire de le déclencher de façon intempestive.

Par ailleurs, dans un premier mode de réalisation, lesdites couches externe et interne 14, 15 sont agencées sur toute ladite partie structurelle 11, ce qui permet d'obtenir une protection globale de l'ensemble de la coiffe 2.

En outre, dans un second mode de réalisation, lesdites couches externe et interne 14, 15 sont agencées uniquement sur une partie ou extrémité avant de la partie structurelle 11, au niveau du nez uniquement, ce qui permet de réduire la masse de la coiffe de protection 2 tout en appliquant une protection aux zones les plus chaudes. Dans ce second mode de réalisation, la partie structurelle 11 est réalisée, de préférence, en un matériau composite à matrice céramique, qui présente une bonne protection thermique et apporte ainsi une protection thermique notamment pour la ou les parties non pourvues de couches 14 et 15.

Ainsi, dans le cadre de la présente invention, on utilise une couche externe 14 de protection thermique plus fine pour que le matériau structurant (partie structurelle 11) travaille à une température plus élevée. Il apparaît une légère perte de ses propriétés, mais celle-ci est limitée. En contrepartie, la surface interne 13 étant plus chaude (plusieurs centaines de degrés), elle est recouverte de la couche interne 15 de protection thermique pour protéger l'intérieur 17 et notamment le véhicule terminal 6, du rayonnement et des effets convectifs.

La coiffe de protection 2 comprend ainsi une protection thermique interne empêchant un transfert thermique préjudiciable pour les structures, les équipements embarqués et en particulier le capteur 8 du véhicule terminal 6. La présente invention peut s'appliquer à tout type de missile pourvu d'une coiffe de protection 2. Ainsi, en particulier, elle n'est pas limitée par la portée du missile et la présence ou non d'étages, et elle ne dépend pas de l'altitude de vol.

## Revendications

1. Paroi structurante de missile, ladite paroi (10) comprenant une partie structurelle (11) pourvue d'une face externe (12) et d'une face interne (13), ladite paroi (10) comprenant, au moins au niveau d'une partie (16) de la partie structurelle (11) :
- sur la face externe (12) de la partie structurelle (11), au moins une couche externe (14) de protection thermique ; et
- sur la face interne (13) de la partie structurelle (11), au moins une couche interne (15) de protection thermique,
**caractérisée**
**en ce que** la couche interne (15) est réalisée en un matériau présentant une densité plus faible d'un rapport compris entre 2 et 20 que celle du matériau de la couche externe (14).

2. Paroi structurante selon la revendication 1,
**caractérisée en ce que** la couche externe (14) comprend un matériau à base de silicone ou de graphite pourvu d'éléments intégrés.

3. Paroi structurante selon l'une des revendications 1 et 2, **caractérisée en ce que** la couche externe (14) est configurée pour réaliser également une protection mécanique.

4. Paroi structurante selon l'une quelconque des revendications précédentes,
**caractérisée en ce que** la couche interne (15) comprend un matériau fibreux.

5. Paroi structurante selon l'une quelconque des revendications précédentes,
**caractérisée en ce que** ladite partie structurelle (11) est réalisée en l'un des matériaux suivants : un matériau métallique, un matériau composite thermo-structural, un matériau céramique.

6. Paroi structurante selon l'une quelconque des revendications précédentes,
**caractérisée en ce qu'**elle comprend au moins deux coques (3, 4) liées ensemble au niveau de zones de liaison (18), et **en ce que** ladite couche externe (14) recouvre ladite face externe (12) également au niveau desdites zones de liaison (18) et ladite couche interne (15) libère lesdites zones de liaison (18) sur ladite face interne (13).

7. Paroi structurante selon l'une quelconque des revendications précédentes,
**caractérisée en ce qu'**elle comporte au moins une pièce interne (19) liée par au moins l'une de ses extrémités (19A) à la partie structurelle (11), ladite pièce interne (19) étant liée à la face interne (13) de la partie structurelle (11) par l'intermédiaire d'un élément d'interface (20) de protection thermique, au travers d'une ouverture (21) prévue dans la couche interne (15).

8. Paroi structurante selon la revendication 7,
**caractérisée en ce que** l'élément d'interface (20) est réalisé en un matériau identique à celui de la couche externe (14).

9. Paroi structurante selon l'une quelconque des revendications 1 à 8, **caractérisée en ce que** lesdites couches externe et interne (14, 15) sont agencées sur toute ladite partie structurelle (11).

10. Paroi structurante selon l'une quelconque des revendications 1 à 8,
**caractérisée en ce que** lesdites couches externe et interne (14, 15) sont agencées uniquement sur une partie de la partie structurelle (11).

11. Paroi structurante selon la revendication 10,
**caractérisée en ce que** la partie structurelle (11) est réalisée en l'un des matériaux suivants : un matériau composite thermo-structural, un matériau céramique.

12. Paroi structurante selon l'une quelconque des revendications précédentes,
**caractérisée en ce qu'**elle représente la paroi (10) d'une coiffe de protection (2) qui est destinée à être montée à l'avant du missile (1).

13. Missile,
**caractérisé en ce qu'**il comporte une paroi structurante telle que celle spécifiée sous l'une quelconque des revendications 1 à 12.

## Patentansprüche

1. Strukturierende Wand für eine Rakete, wobei die Wand (10) ein Strukturteil (11) umfasst, das mit einer äußeren Fläche (12) und einer inneren Fläche (13) versehen ist, wobei die Wand (10) zumindest an einem Teil (16) des Strukturteils (11) umfasst:
- auf der äußeren Fläche (12) des Strukturteils (11) mindestens eine äußere Schicht (14) zum Wärmeschutz; und
- auf der inneren Fläche (13) des Strukturteils (11) mindestens einer innere Schicht (15) zum Wärmeschutz,
**dadurch gekennzeichnet, dass** die innere Schicht (15) aus einem Material hergestellt ist, das eine geringere Dichte mit einem Verhältnis aufweist, das zwischen 2 und 20 zu derjenigen des Materials der äußeren Schicht (14) liegt.

2. Strukturierende Wand nach Anspruch 1, **dadurch gekennzeichnet, dass** die äußere Schicht (14) ein Material auf Basis von Silikon oder Graphit umfasst, das mit integrierten Elementen versehen ist.

3. Strukturierende Wand nach einem der Ansprüche 1 und 2, **dadurch gekennzeichnet, dass** die äußere Schicht (14) eingerichtet ist, um auch einen mechanischen Schutz durchzuführen.

4. Strukturierende Wand nach einem der vorhergehenden Ansprüche, **dadurch gekennzeichnet, dass** die innere Schicht (15) ein faseriges Material umfasst.

5. Strukturierende Wand nach einem der vorhergehenden Ansprüche, **dadurch gekennzeichnet, dass** das Strukturteil (11) aus einem der folgenden Materialien hergestellt ist: einem metallischen Material, einem thermostrukturellen Verbundmaterial, einem keramischen Material.

6. Strukturierende Wand nach einem der vorhergehenden Ansprüche, **dadurch gekennzeichnet, dass** es mindestens zwei Schalen (3, 4) umfasst, die an Verbindungszonen (18) miteinander verbunden sind, und dass die äußere Schicht (14) die äußere Fläche (12) auch bei den Verbindungszonen (18) bedeckt, und dass die innere Schicht (15) die Verbindungszonen (18) auf der inneren Fläche (13) freilässt.

7. Strukturierende Wand nach einem der vorhergehenden Ansprüche, **dadurch gekennzeichnet, dass** sie mindestens ein inneres Teil (19) umfasst, das mit mindestens einem seiner Enden (19A) mit dem Strukturteil (11) verbunden ist, wobei das innere Teil (19) mit der innere Fläche (13) des Strukturteils (11) über ein Schnittstellenelement (20) zum Wärmeschutz durch eine Öffnung (21) verbunden ist, die in der inneren Schicht (15) vorgesehen ist.

8. Strukturierende Wand nach Anspruch 7, **dadurch gekennzeichnet, dass** das Schnittstellenelement (20) aus einem Material hergestellt ist, das identisch mit demjenigen der äußeren Schicht (14) ist.

9. Strukturierende Wand nach einem der Ansprüche 1 bis 8, **dadurch gekennzeichnet, dass** die äußere und innere Schicht (14, 15) über dem Strukturteil (11) angeordnet sind.

10. Strukturierende Wand nach einem der Ansprüche 1 bis 8, **dadurch gekennzeichnet, dass** die äußere und innere Schicht (14, 15) nur über einem Teil des Strukturteils (11) angeordnet sind.

11. Strukturierende Wand nach Anspruch 10, **dadurch gekennzeichnet, dass** das Strukturteil (11) aus einem der folgenden Materialien hergestellt ist: einem thermostrukturellen Verbundmaterial, einem keramischen Material.

12. Strukturierende Wand nach einem der vorhergehenden Ansprüche, **dadurch gekennzeichnet, dass** sie die Wand (10) einer Schutzhaube (2) darstellt, die vorgesehen ist, vorne an der Rakete (1) angebracht zu werden.

13. Rakete, **dadurch gekennzeichnet, dass** sie eine strukturierende Wand aufweist, wie sie in einem der vorhergehenden Ansprüche 1 bis 12 angegeben ist.

## Claims

1. Missile structural wall, said wall (10) comprising a structural part (11) provided with an outer surface (12) and an inner surface (13), said wall (10) comprising at least in the area of a part (16) of the structural part (11):
- on the outer surface (12) of the structural part (11), at least one outer thermal protection layer (14); and
- on the inner surface (13) of the structural part (11), at least one inner thermal protection layer (15),
**characterised in that** the internal layer (15) is made from a material having a density that is between 2 and 20 times lower than that of the material of the outer layer (14).

2. Structural wall according to claim 1, **characterised in that** the outer layer (14) comprises a silicon- or graphite-based material provided with integrated components.

3. Structural wall according to either claim 1 or 2, **characterised in that** the outer layer (14) is configured to also provide mechanical protection.

4. Structural wall according to any one of the preceding claims, **characterised in that** the internal layer (15) comprises a fibrous material.

5. Structural wall according to any one of the preceding claims, **characterised in that** said structural part (11) is made from one of the following materials: a metallic material, a thermo-structural composite material, a ceramic material.

6. Structural wall according to any one of the preceding claims, **characterised in that** it comprises at least two shells (3, 4) connected together in the area of connection zones (18), and **in that** said outer layer (14) covers said outer surface (12) also in the area of said connection zones (18) and said inner layer (15) releases said connection zones (18) on said inner surface (13).

7. Structural wall according to any one of the preceding claims, **characterised in that** it comprises at least one internal part (19) connected by at least one of its ends (19A) to the structural part (11), said internal part (19) being connected to the inner surface (13) of the structural part (11) through the intermediary of a thermal protection interface component (20) via an opening (21) provided in the inner layer (15).

8. Structural wall according to claim 7, **characterised in that** the interface component (20) is made from a material identical to that of the outer layer (14).

9. Structural wall according to any of claims 1 to 8, **characterised in that** said outer and inner layers (14, 15) are arranged over all of said structural part (11).

10. Structural wall according to any one of claims 1 to 8, **characterised in that** said outer and inner layers (14, 15) are arranged only on a part of the structural part (11).

11. Structural wall according to claim 10, **characterised in that** the structural part (11) is made from one of the following materials: a thermo-structural composite material, a ceramic material.

12. Structural wall according to any one of the preceding claims, **characterised in that** it represents the wall (10) of a protection fairing (2) intended to be mounted at the front of the missile (1).

13. Missile, **characterised in that** it comprises a structural wall as specified in any of claims 1 to 12.
